# EUROPEAN PATENT APPLICATION

(11) **EP 3 490 225 A1**
(43) Date of publication of application: **29.05.2019**
(21) Application number: 18207932.7
(22) Date of filing: 23.11.2018
(51) Int. Cl.: H04L 29/08, G06F 9/48, G06F 9/50

(54) **COMPUTATION APPARATUS, RESOURCE ALLOCATION METHOD THEREOF, AND COMMUNICATION SYSTEM**

(30) Priority: 24.11.2017 US 201762590370 P
(71) Applicant: Industrial Technology Research Institute, 31040 Hsinchu (TW)
(72) Inventor: TIEN, Po-Lung, 302 Hsinchu County (TW); YUANG, Maria Chi-Jui, 300 Hsinchu City (TW); CHEN, Hong-Xuan, 116 Taipei City (TW); HSU, Yi-Huai, 330 Taoyuan City (TW); CHEN, Ying-Yu, 310 Hsinchu County (TW); CHANG, Hung-Cheng, 330 Taoyuan City (TW)
(74) Representative: Becker, Eberhard

(57) **Abstract**

A computation apparatus (120, 130, 130-1∼130-4), a resource allocation method thereof and a communication system (2, 3) are provided. The communication system (2, 3) includes at least two computation apparatuses (120, 130, 130-1∼130-4) and an integration apparatus (110). The computation apparatuses (120, 130, 130-1∼130-4) transmit request contents, and each of the request contents is related to data computation. The integration apparatus (110) integrates the request contents of the computation apparatuses (120, 130, 130-1∼130-4) into a computation demand, and broadcasts the computation demand. Each of the computation apparatuses (120, 130, 130-1∼130-4) obtains a resource allocation of all of the computation apparatuses (120, 130, 130-1∼130-4) according to the computation demand. Moreover, each of the computation apparatuses (120, 130, 130-1∼130-4) performs the data computation related to the request content according to a resource allocation of itself. In this way, a low-latency service is achieved, and reliability is improved.

## Description

### TECHNICAL FIELD

The disclosure relates to a computation apparatus, a resource allocation method thereof and a communication system.

### BACKGROUND

Cloud computation has become one of the most important elements in wide application of basic information technology, and users may use the cloud computation seamlessly on work, entertainment and even social networking related applications, as long as they have networking apparatuses nearby. As the number of the users and data amount arc gradually increased, problems in latency, privacy and traffic load, etc., are emerged, and it is more difficult to complete all user computations based on resources of a cloud server. In order to mitigate the above problems, related researches such as a fog computation structure, makes the cloud service function to be closer to a client terminal (for example, a sensor, a smart phone, a desktop computer, etc.). The fog computation structure is to distribute the load of the server through many fog nodes.

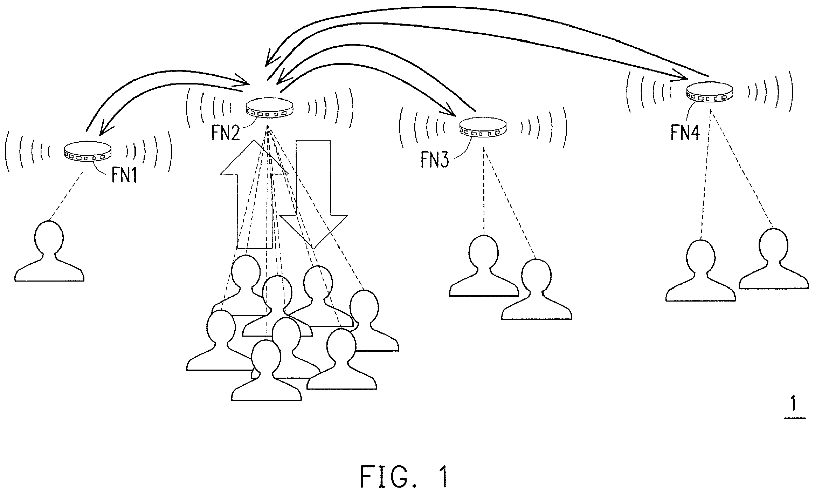

FIG. 1 is a schematic diagram of a conventional distributed fog computation structure 1. Referring to FIG. 1, the fog computation structure 1 includes fog nodes FN1-4. Neighboring users of each of the fog nodes FN1-4 may access the closest fog nodes FN1-4. These fog nodes FN1-4 are in charge of data computation of the connected users. However, inevitably, most of the users are probably gathered within, for example, a service coverage range of the fog node FN2, which further increases the load of the fog node FN2. The fog node FN2 is more likely unable to deal with the data amount of all of the connected user terminals. Now, the other fog nodes FN1, FN3 and FN4 probably have remained computation capability to serve the other user terminals. Although the existing technique already has centralized load balancing controller to resolve the problem of uneven resource allocation, it probably has a problem of Single Point of Failure (SPF) (i.e. failure of the controller may result in failure in obtaining an allocation result), so that reliability thereof is low. Moreover, according to the existing technique, an allocation decision needs to be transmitted to the fog nodes FN1-4 in order to start operation, which usually cannot meet the requirement on an ultra-low latency service. Therefore, how to achieve the low latency service requirement and improve reliability is an important issue of the field.

### SUMMARY

The disclosure is directed to a computation apparatus, a resource allocation method thereof and a communication system.

An embodiment of the disclosure provides a computation apparatus including a communication transceiver and a processor. The communication transceiver transmits or receives data. The processor is coupled to the communication transceiver, and is configured to execute following steps. A computation demand is received through the communication transceiver. The computation demand includes request contents of the computation apparatus and at least one second computation apparatus, and each of the request contents is related to data computation. A resource allocation of the computation apparatus and the second computation apparatuses is obtained according to the computation demand. The data computation related to the request content is processed according to a resource allocation of the computation apparatus itself.

An embodiment of the disclosure provides a resource allocation method, which is adapted to a computation apparatus. The resource allocation method includes following steps. A computation demand is received. The computation demand includes request contents of the computation apparatus and a second computation apparatus, and each of the request contents is related to data computation. A resource allocation of the computation apparatus and the second computation apparatuses is obtained according to the computation demand. The data computation related to the request content is processed according to a resource allocation of the computation apparatus itself.

An embodiment of the disclosure provides a communication system including at least two computation apparatuses and an integration apparatus. The computation apparatuses transmit request contents, and each of the request contents is related to data computation. The integration apparatus integrates the request contents of the computation apparatuses into a computation demand, and broadcasts the computation demand. Each of the computation apparatuses obtains a resource allocation of all of the computation apparatuses according to the computation demand. Moreover, each of the computation apparatuses performs the data computation related to the request content according to a resource allocation of itself.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a conventional distributed fog computation structure.
FIG. 2 is a schematic diagram of a communication system according to an embodiment of the disclosure.
FIG. 3 is a flowchart illustrating a resource allocation method according to an embodiment of the disclosure.
FIG. 4 is an operational flowchart of a computation apparatus according to an embodiment of the disclosure.
FIG. 5 is a flowchart illustrating collaborative computation according to an embodiment of the disclosure.
FIG. 6 is a flowchart illustrating navigation positioning according to an embodiment of the disclosure.
FIG. 7 is a schematic diagram of a communication system according to an embodiment of the disclosure.
FIG. 8 is an operation flowchart of an integration apparatus according to an embodiment of the disclosure.
FIG. 9 is a schematic diagram of resource allocation according to an embodiment of the disclosure.
FIG. 10 is a schematic diagram of replacement of an integration apparatus according to an embodiment of the disclosure.

### DESCRIPTION OF THE EMBODIMENTS

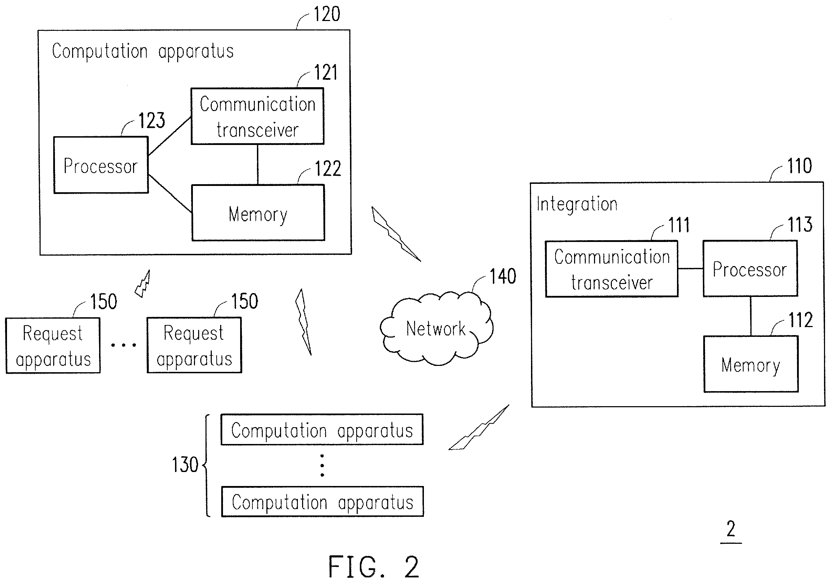

FIG. 2 is a schematic diagram of a communication system 2 according to an embodiment of the disclosure. Referring to FIG. 2, the communication system 2 at least includes but not limited an integration apparatus 110, a computation apparatus 120, one or multiple computation apparatuses 130, and one or multiple request apparatuses 150.

The integration apparatus 110 may be an electronic apparatus such as a server, a desktop computer, a notebook computer, a smart phone, a tablet Personal Computer (PC), a work station, etc. The integration apparatus 110 at least includes (but not limited to) a communication transceiver 111, a memory 112 and a processor 113.

The communication transceiver 111 may be a transceiver supporting wireless communications such as Wi-Fi, Bluetooth, fourth generation (4G) or later generations of mobile communications, etc., (which may include, but is not limited to, an antenna, a digital to analog/analog to digital converter, a communication protocol processing chip, etc.), or supporting wired communications such as Ethernet, fiber optics, etc., (which may include, but is not limited to, a connection interface, a signal converter, a communication protocol processing chip, etc.). In the embodiment, the communication transceiver 111 is configured to transmit data to and/or receive data from an external apparatus.

The memory 112 may be any type of a fixed or movable Random Access Memory (RAM), a Read-Only Memory (ROM), a flash memory, or similar component or a combination of the above components. The memory 112 is configured to store program codes, device configurations, codebooks, software modules, buffered or permanent data (for example, information such as request contents, computation demands, identification information, etc., and details thereof are described later), and record other various communication protocol (for example, complied with specifications of the communication transceiver 111) related software modules such as a physical layer, a Media Access Control (MAC) layer/data link layer, a network layer and upper layer, etc.

The processor 113 is configured to process digital signals and execute procedures of the exemplary embodiments of the disclosure. Functions of the processor 113 may be implemented by a programmable unit such as a Central Processing Unit (CPU), a microprocessor, a micro controller, a Digital Signal Processing (DSP) chip, a Field Programmable Gate Array (FPGA), etc. The functions of the processor 13 may also be implemented by an independent electronic apparatus or an Integrated Circuit (IC), and operations of the processor 113 may also be implemented by software.

The computation apparatus 120 may be an electronic apparatus such as a server, a desktop computer, a notebook computer, a smart phone, a tablet PC, an embedded system, a work station, etc. The computation apparatus 120 at least includes (but not limited to) a communication transceiver 121, a memory 122 and a processor 123.

Implementations of the transceiver 121, the memory 122 and the processor 123 may refer to related description of the transceiver 111, the memory 112 and the processor 113, and details thereof are not repeated. It should be noted that the memory 122 further records data or information such as a resource allocation, data to be computed, capability and resource usage statuses, and computation models, etc., of the computation apparatuses 120 and 130, and detailed contents thereof are described later.

Implementation of the computation apparatus 130 and electronic components included therein (i.e. having the same or similar components) may refer to related description of the computation apparatus 120, and detail thereof is not repeated. In some embodiments, the computation apparatus 120 and 130 may be a first layer fog nodes (i.e. for receiving and processing request and data of client terminals) in a fog computation structure. It should be noted that the integration apparatus 110 and the computation apparatuses 120 and 130 may directly or indirectly communicate with each other (for example, direct communication or Device-to-Device (D2D) communication of regional routing communication, or access through a network access apparatus (for example, a Wi-Fi sharer, a router, etc.), the Internet, etc.) through a network 140 (for example, the Internet, a local area network, etc.)

The request apparatuses 150 may be any type of electronic apparatuses such as sensors, smart phones, desktop computers, notebook computers, handheld game consoles, smart glasses, robots, networked home appliances, etc. The request apparatuses 150 may also be directly or indirectly connected to the computation apparatus 120 through the same or compatible communication techniques. It should be noted that the connection between the request apparatuses 150 and the computation apparatus 120 of the embodiment is only for the convenience of subsequent description, and in other embodiments, the request apparatuses 150 may also be directly or indirectly connected to the computation apparatuses 130.

In order to facilitate understanding of an operation flow of the embodiment of the disclosure, multiple embodiments is provided below to describe the operation flow of the communication system 2 of the embodiment of the disclosure in detail.

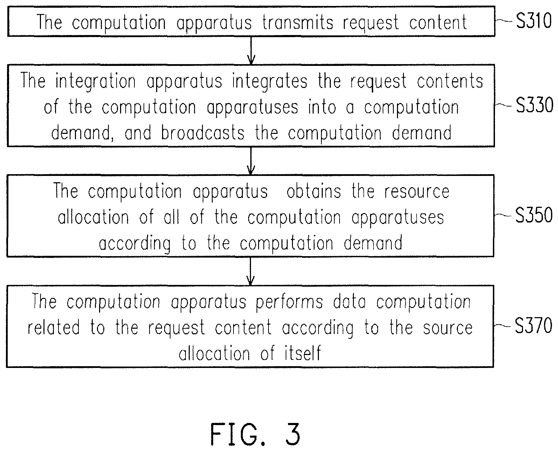

FIG. 3 is a flowchart illustrating a resource allocation method according to an embodiment of the disclosure. Referring to FIG. 3, the resource allocation method of the embodiment is adapted to all of the apparatuses in the communication system 2 of FIG. 2. In the following description, the resource allocation method of the embodiment of the disclosure is described with reference of various components and modules in the integration apparatus 110 and the computation apparatuses 120 and 130. Various flows of the resource allocation method may be adjusted according to an actual requirement, and the disclosure is not limited thereto. Moreover, to facilitate description, the computation apparatus 120 is taken as a representative of the computation apparatuses 120 and 130 in the following embodiments, and operations of the computation apparatuses 130 may refer to related description of the computation apparatus 120.

One or multiple the request apparatuses 150 sends a client request to the computation apparatus 120. The client request includes data to be computed and is related to data computation of the data to be computed. The data to be computed may be various types of data such as an image, a text, a pattern, positioning data, sensing data or authentication data, etc. The data computation is to perform analysis and/or processing to the data to be computed, for example, image recognition, position searching, authentication, sensing value analysis and comparison, etc. It should be noted that types and applications of the data to be computed and the corresponding data computation are plural, which may be changed according to an actual requirement of the user, and are not limited by the disclosure.

After the communication transceiver 121 of the computation apparatus 120 receives client requests from the request apparatuses 150, the processor 123 generates request content according to each of the client requests in real-time, in a regular time (i.e. in every a specific time interval), or after a specific number is accumulated (for example, after 3 client requests are accumulated, after the client requests of 10 request apparatuses 150 are accumulated, etc.). In the embodiment, the processor 123 may determine a data amount to be computed according to the client requests, and obtain a delay tolerance (or referred to as delay limitation) of a result after the data computation (which is probably embedded in the client request, or obtained by the processor 123 through database comparison), and the processor 123 further takes the data amount and the delay tolerance as information of the request content. The data amount to be computed refer to a data amount (or a data magnitude) of the data to be computed in the client requests. The delay tolerance refers to a delay tolerance time of the corresponding application program or system on the request apparatus 150 for obtaining the result of the data computation. For example, operation is interrupted or errors may occur when the delay tolerance time is exceeded.

Then, the communication transceiver 121 transmits the request content (recording the data amount and the delay tolerance corresponding to the received client request) (step S310). In the embodiment, the communication transceiver 121 may send the request content to the integration apparatus 110 via the network 140 in real-time or in a regular time (i.e. in every a specific time interval). Similarly, the computation apparatuses 130 also transmit the received request contents to the integration apparatus 110 through the network 140.

The processor 113 of the integration apparatus 110 integrates the request contents of all of or a part of the computation apparatuses 120 and 130 into a computation demand, and broadcasts the computation demand through the communication transceiver 111 (step S330). To be specific, the processor 113 may calculate the data amount of all of the request contents in real-time, in a regular time (i.e. in every a specific time interval), or after a specific number is accumulated (for example, after 10 batches of the request contents are accumulated, after the request contents of 5 computation apparatuses 120 and 130 arc accumulated, etc.), and mark the delay tolerance corresponding to the client request in each request content, and integrates the aforementioned information into one batch of computation demand. In other words, the computation demand synthesizes the data amounts and the corresponding delay tolerances of the client requests received by the computation apparatuses 120 and 130 sending the request contents. After the processor 113 generates the computation demand, the processor 113 transmits or broadcasts the computation demand to all of the computation apparatuses 120 and 130 in the network 140 through the communication transceiver 111.

It should be noted that the integration apparatus 110 transmits the computation demand integrating the request contents of all of the computation apparatuses 120 and 130 to all of the computation apparatuses 120 and 130 all at once. In this way, a transceiving behavior of the integration apparatus 110 of the embodiment of the disclosure may serve as a reference for time synchronization. Compared to the situation of sending the same to the other computation apparatuses 120 and 130 through the computation apparatuses 120 and 130 themselves, occurrence of a race condition caused by out of synchronization is avoided in the embodiment. Moreover, the integration apparatus 110 of the embodiment is different to an existing centralized controller, and the integration apparatus 110 is unnecessary to derive a resource allocation of the computation apparatuses 120 and 130 according to the computation demand. Decision of the resource allocation is handled by the computation apparatuses 120 and 130, which is described in detail below.

The processor 123 of the computation apparatus 120 receives the computation demand from the integration apparatus 110 through the communication transceiver 121, and obtains the resource allocation of all of the computation apparatuses 120 and 130 according to the computation demand (step S350). To be specific, the computation apparatus 120 of the embodiment of the disclosure is not only required to decide a resource allocation of itself, but is also required to synthetically determine the resource allocation of the other computation apparatuses 130 under the network 140.

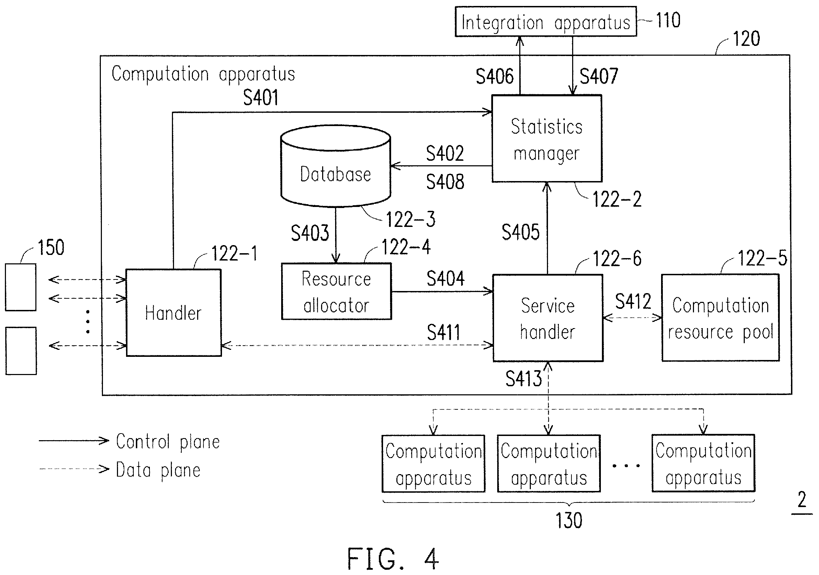

FIG. 4 is an operational flowchart of the computation apparatus 120 according to an embodiment of the disclosure. Referring to FIG. 4, the memory 122 of the computation apparatus 120 records software modules such as a request handler 122-1, a statistics manager 122-2, a database 122-3, a resource allocator 122-4, a computing resource pool 112-5, and a service handler 122-6, etc., a storage space or resources, and operation thereof is described later. The request handler 122-1 generates the request contents (including the data amount and the corresponding delay tolerance, etc.) according to the client requests of the request apparatuses 150 as that described above (step S401). The statistics manager 122-2 writes the request contents into the database 122-3 (step S402) (and may obtain the request contents of the other computation apparatuses 130 through the computation demand coming from the integration apparatus 110).

The resource allocator 122-4 obtains the request contents of all of the computation apparatuses 120 and 130, a total number of the computation apparatuses 120 and 130, a total number of connections therebetween, a connection method thereof (for example, network topology), capability (for example, an overall/remained computation capability, communication support specifications, processor specifications, etc.), and resource usage status (for example, remained bandwidth, a total number of connections, etc.) from the database 122-3 (step S403), and the resource allocator 122-4 executes resource allocation to all of the computation apparatuses 120 and 130 according to the obtained data.

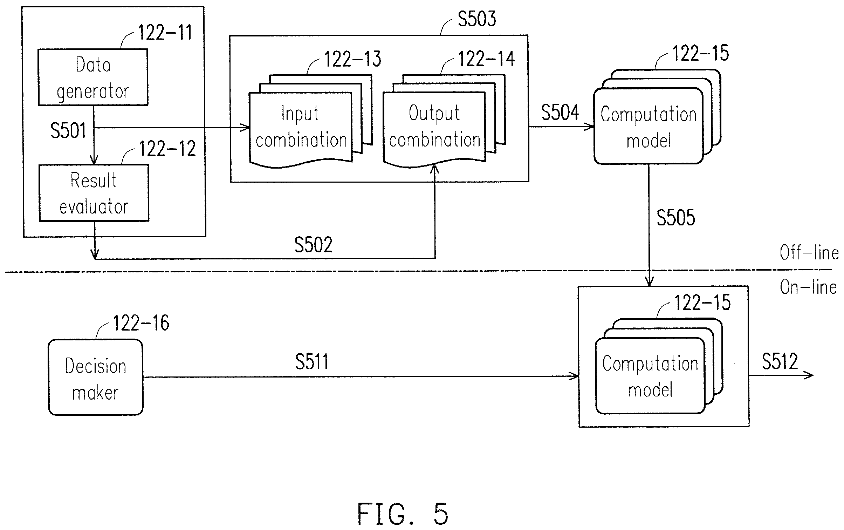

There are many ways for the resource allocator 122-4 to obtain the resource allocation. FIG. 5 is a flowchart illustrating collaborative computation according to an embodiment of the disclosure. Referring to FIG. 5, the memory 122 of the computation apparatus 120 further records a data generator 122-11, a result evaluator 122-12, one or more input combinations 122-13, one or more output combinations 122-14, one or more computation models 122-15 and a decision maker 122-16. In the embodiment, decision of the resource allocation is divided into two stages: an off-line stage and an on-line stage.

In the off-line stage, the data generator 122-11 randomly generates content (for example, the data amount, the delay tolerance, the total number of the computation apparatuses 120 and 130) of the computation demand, capability (for example, hardware specifications, computation capability, network transmission speeds, available bandwidths, etc.) of the computation apparatuses 120 and 130, and path information (for example, a transmission delay (spending time), a connected bandwidth, a routing path, a total number of connections, the number of paths between the computation apparatuses 120 and 130, etc.) of the network topology of the network 140 to serve as multiple batches of input parameters. In other words, the data generator 122-11 is a possible variation/various application situations related to the data computation under the communication system 2. The data generator 122-11 may take these input parameters as one of or multiple of input combinations 122-13, and each of the input combinations 122-13 corresponds to one simulated application situation and is input to the result evaluator 122-12 (step S501).

The result evaluator 122-12 inputs the input parameters to a first algorithm to obtain several output parameters, and the output parameters are related to the resource allocation. In an embodiment, the resource allocation is related to a computation amount handled by all of the computation apparatuses 120, 130, and the result evaluator 122-12 obtains the computation amount respectively handled by each of the computation apparatuses 120 and 130 for a data mount of the data to be computed. For example, there are 5 pieces of data in the data amount, and two pieces of data is allocated to the computation apparatus 120, and 3 pieces of data is allocated to one of the computation apparatuses 130. Moreover, the result evaluator 122-12 may also obtain paths for transmitting results of the corresponding data computations by the computation apparatuses 120 and 130 (i.e. a method for each computation amount corresponding to the transmission path) according to the delay tolerance recorded in the computation demand. In other words, the decision of the computation amount also takes the delay tolerance corresponding to the client request into consideration, i.e. a computation time and a transmission time between each of the computation apparatuses 120 and 130 are synthetically considered. For example, a computation time of the computation apparatus 130 on a specific computation amount plus a transmission time that the computation apparatus 130 transmits back a computation result to the computation apparatus 120 (and the computation apparatus 120 transmits the same to the request apparatus 150) is smaller than or equal to the corresponding delay tolerance. Namely, each of the paths is related to a transmission delay between the computation apparatuses 120 and 130, and now the resource allocation is related to each of the paths. Now, the output parameters are related to a distribution status and transmission method of the data to be computed corresponding to the client request in the computation apparatuses 120 and 130 under a simulation situation. Moreover, the result evaluator 122-12 takes the output parameters of the aforementioned computation amount and paths as one piece of output combination 122-14 (step S502). On the other hand, the first algorithm is, for example, a Linear Programming (LP) algorithm, a heuristic algorithm or other algorithm.

Then, the processor 123 may train a computation model through a second algorithm different to the first algorithm based on the input combination 122-13 consisting of the input parameters and the output combination 122-14 consisting of the output parameters (step S503). In the embodiment, the second algorithm is, for example, a Machine Learning (ML) algorithm such as an Artificial Neural Network (ANN), a Region-based Convolutional Neural Network (R-CNN), or a You Only Look Once (YOLO), etc. The processor 123, for example, takes the input combination 122-13 and the output combination 122-14 as a training sample to correct corresponding weights of each of neurons in a hidden layer, so as to establish a computation model 122-15.

It should be noted that the steps S501-S503 may be executed repeatedly to establish the computation models 122-15 corresponding to different application situations through different input combinations 122-13 (i.e. different input parameters are randomly generated) and the output combinations 122-14 (step S504). It should be noted that the aforementioned randomly generated content is probably limited to a specific range (for example, a specific range of the number of the computation apparatuses 120 and 130, a connection bandwidth, etc.), so as to reduce the computation time.

Then, the computation models 122-15 are provided to the on-line stage for usage (step S505). In the on-line stage (for example, in response to reception of the computation demand), the decision maker 122-16 selects one of multiple computation models 122-15 according to the computation demand (for example, the request contents of each of the computation apparatuses 120 and 130) and capability (for example, computation capability, communication capability, etc.) of the computation apparatuses 120 and 130 and resource usage status (transmission remained bandwidth, remained computation capability, etc.) (step S511). In other words, the processor 123 obtains the computation model 122-15 complied with the current situation from the computation models 122-15 established under the simulation situation. In response to a change of the computation demand, the network topology, the capability and the resource usage status, the decision maker 122-16 may dynamically switch the proper computation model 122-15. Then, the processor 123 may input the computation demand to the selected computation model 122-15 to obtain the content of the resource allocation (step S512). The resource allocation is related to the aforementioned computation amount and the corresponding transmission path of all of the computation apparatuses 120 and 130 obtained by the result evaluator 122-12. It should be noted that in the on-line stage, each of the computation models 122-15 may be dynamically trained or adjusted according to the current state, so as to improve an online training ability, and the computation models 122-15 may be added or deleted according to an actual application situation.

Different from using a single algorithm, according to the embodiment, a large amount of computation models 122-15 may be trained during the off-line stage, and the resource allocation is decided through the selected computation model 122-15 in the on-line stage, by which not only a low latency service request is achieved, a resource-balanced resource allocation result may be further provided. It should be noted that in some embodiments, the processor 123 may also adopt one of the first algorithm or the second algorithm to obtain the resource allocation.

After the resource allocation is calculated, the processor 123 of the computation apparatus 120 performs data computation related to the request content according to the source allocation of itself (step S370). Referring back to FIG. 4, the request handler 122-1 transmits the data to be computed in the client request coming from the request apparatus 150 to the service handler 122-6 (step S411). The resource allocator 122-4 transmits the resource allocation to the service handler 122-6 (step S404). The service handler 122-6 determines a computation amount belonging to itself that is instructed by the resource allocation, and obtains corresponding computation resources from the computing resource pool 122-5 (step S412), and performs data computation on the data to be computed of the determined computation amount though the computation resources. It should be noted that the data to be computed that is handled by the computation apparatus 120 is probably provided by the connected request apparatuses 150 or provided by the other computation apparatuses 130. In other words, if the data amount of the data to be computed that is provided by the connected request apparatuses 150 is greater than the computation amount instructed by the resource allocation, the service handler 122-6 may also transmit the data to be computed that is provided by a part of or all of the request apparatuses 150 to the other computation apparatuses 130 through the communication transceiver 121 (step S413). The path along which the communication transceiver 121 transmits the data to be computed is based on the path instructed by the resource allocation. The computation apparatus 120 may probably transmit a computation result of the data to be computed that belongs to the other computation apparatus 130 to the corresponding computation apparatus 130 according to the instructed path, or the computation apparatus 130 may transmit a computation result of the data to be computed that belongs to the computation apparatus 120 to the computation apparatus 120. The request handler 122-1 transmits the computation result to the corresponding request apparatus 150 through the communication transceiver 121 according to an actual demand.

In order to synchronize data of the computation apparatuses 120 and 130, the service handler 122-6 further transmits the aforementioned resource allocation to the statistics manager 122-2 (step S405). The statistics manager 122-2 transmits the data amount of the request content received by itself, the corresponding delay tolerance, the computation amount and the transmission path of each of the computation apparatuses 120 and 130 instructed by the resource allocation, and the computation amount to be released after the computation result is obtained to the integration apparatus 110 through the communication transceiver 121 (step S406). The processor 113 of the integration apparatus 110 integrates the data amount of the request contents received by all of the computation apparatuses 120 and 130, the corresponding delay tolerance, the resource allocation calculated by all of the computation apparatuses 120 and 130, and the computation amount to be released after the computation result is obtained, and updates the computation apparatus 120 with the request content (for example, the data amount, the corresponding delay tolerance) and the resource usage status (for example, the remained computation capability, the remained bandwidth, etc.) related to the computation apparatus 130 through the communication transceiver 111 (step S407). The updated capability and resource usage status are written into the database 122-3 (step S408) to serve as the input parameters of the resource allocator 122-4 for deciding the resource allocation for the next time.

The embodiment of the disclosure adopts distributed decision (i.e. all of the computation apparatuses 120 and 130 decide the resource allocations related to themselves and the other computation apparatuses). When the integration apparatus 110 has a problem and cannot continue a normal operation, according to the embodiment of the disclosure, another apparatus (for example, the computation apparatuses 120 and 130) may be selected arbitrarily or according to a specific rule to serve as a new integration apparatus 110 to integrate the request contents of each of the computation apparatuses 120 and 130, by which the whole operation of the communication system 2 may be quickly recovered. Moreover, when any one of the computation apparatuses 120 and 130 has a problem and cannot continue the normal operation, the normally operated computation apparatuses 120 and 130 may switch the operation model 122-15 to quickly obtain the result of the resource allocation. In this way, reliability of the whole operation is improved.

In order to fully convey the spirit of the disclosure to those skilled in the art, another application situation is provided below for description.

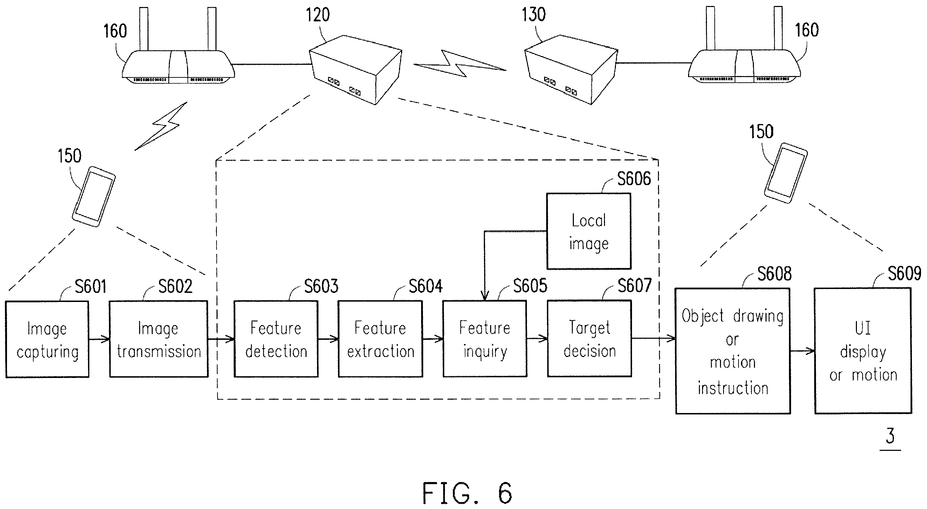

FIG. 6 is a flowchart illustrating navigation positioning according to an embodiment of the disclosure. Referring to FIG. 6, the communication system 3 further includes network access apparatuses 160 (for example, Wi-Fi sharers, routers, etc.). The network access apparatuses 160 may communicate with the request apparatuses 150. The two network access apparatuses 160 are respectively connected to the computation apparatuses 120 and 130. The request apparatuses 150 of the embodiment may be smart phones, smart glasses or service robots, and the request apparatuses 150 have cameras. The request apparatus 150 may automatically or may be operated by the user to capture a surrounding image through the camera (step S601), and the request apparatus 150 takes the image as the content (in form of frame) of the client request transmits the same (step S602). The network access apparatus 160 transmits the image captured by the request apparatus 150 to the computation apparatus 120. The computation apparatus 120 performs image recognition (for example, feature detection (step S603), feature extraction (step S604), feature inquiry (step S605), whether a local image has a matching feature (step S607), etc.) on the obtained image. If the image recognition obtains features matching the local image, the computation apparatus 120 decides a target (for example, coordinates or a relative position, etc.) corresponding to the local image (step S607). The computation apparatus 120 transmits back the decided target to the request apparatus 150 through the network access apparatus 160. The request apparatus 150 then draws objects such as a current position, a surrounding environment, etc. according to the target, or gives a motion instruction for navigation (step S608), and displays the objects on a User Interface (UI) or directly executes a corresponding motion (for example, the robot moves to a specific position, etc.) (step S609).

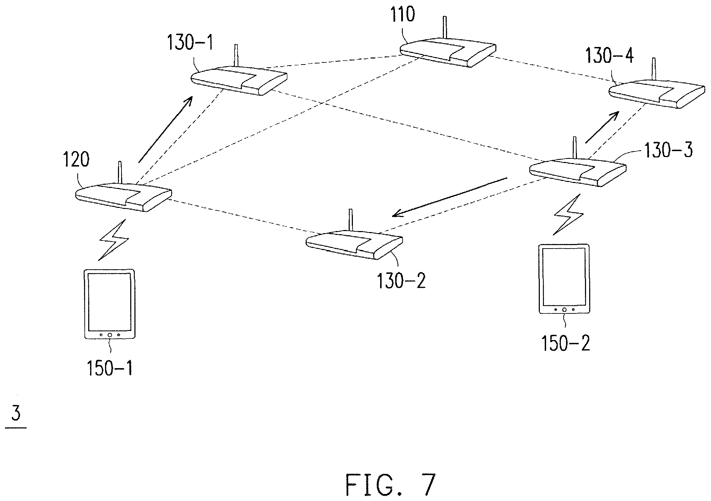

FIG. 7 is a schematic diagram of a communication system 3 according to an embodiment of the disclosure. Referring to FIG. 7, the network access apparatus 160 and the corresponding computation apparatuses 120 and 130-1∼130-4 are taken as one apparatus to facilitate description. All of the computation apparatuses 120 and 130-1∼130-4 and the integration apparatus 110 record network topology information and system information of the communication system 3. For example, the paths, connections, a load capacity of the client requests (for example, request for recognizing corresponding positions of the image in FIG. 6) of each connection, the number of client requests capable of being processed by each of the computation apparatuses 120 and 130-1∼130-4 at the same time (for example, 4 batches of client requests, i.e. the maximum computation amount), the maximum number of hops (for example, twice, which is related to the transmission delay/time) of the data to be computed corresponding to each batch of the client request, etc. It is assumed that the computation apparatus 120 and the computation apparatus 130-3 respectively receive 10 batches and 4 batches of client requests (for example, related to image recognition or positioning of FIG. 6) from the request apparatuses 150-1 and 150-2. The computation apparatus 120 and the computation apparatus 130-3 transmit the corresponding request contents related to the received client requests to the integration apparatus 110.

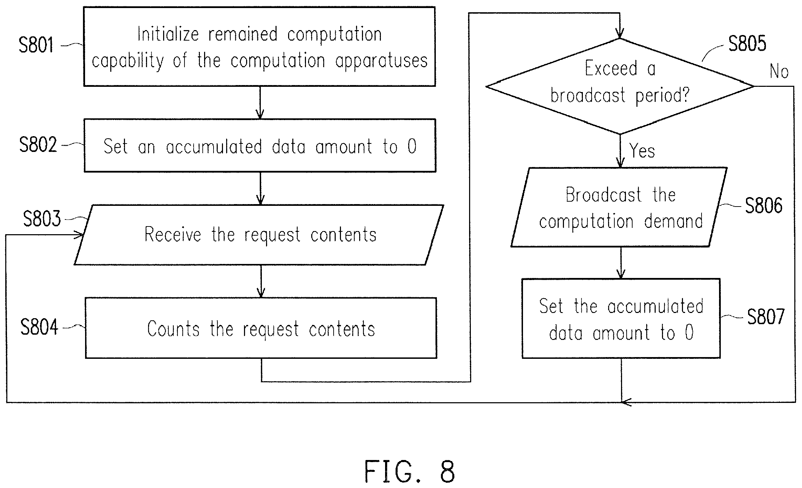

FIG. 8 is an operation flowchart of an integration apparatus 110 according to an embodiment of the disclosure. Referring to FIG. 8, first, the integration apparatus 110 initializes remained computation capability of the computation apparatuses 120 and 130-1∼130-4 (step S801), and sets an accumulated data amount of the client requests of each of the computation apparatuses 120 and 130-1∼130-4 to 0 (step S802). The integration apparatus 110 receives the request contents of the computation apparatus 120 and the computation apparatus 130-3 (step S803), and accordingly counts all of the currently received request contents (step S804) to generate a computation demand. The integration apparatus 110 determines whether an elapsed time since the last broadcast exceeds a broadcast period (for example, 500 ms, 1 s, or 10 s, etc.) (step S805). If the elapsed time does not exceed the broadcast period, the integration apparatus 110 continually receives the request contents (step S803). If the elapsed time exceeds or reach the broadcast period, the integration apparatus 110 broadcasts the existing computation demand (step S806), and sets the accumulated data amount of the client requests of each of the computation apparatuses 120 and 130-1∼130-4 to 0 (step S807), and continually receives the request contents (step S803).

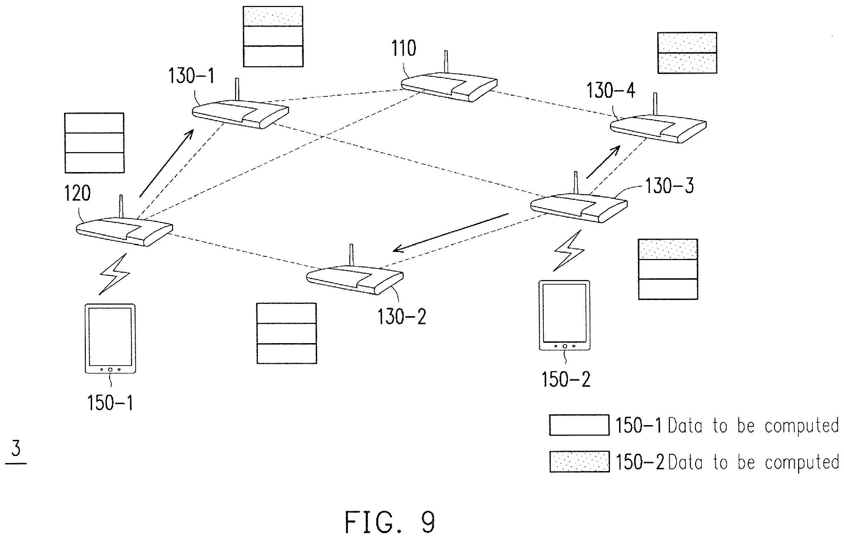

FIG. 9 is a schematic diagram of resource allocation according to an embodiment of the disclosure. Referring to FIG. 9, each of the computation apparatuses 120 and 130-1∼130-4 may determine a resource allocation status of itself and the other computation apparatuses 120 and 130-1∼130-4 according to the received computation demand. Since the number of the client requests received by the computation apparatus 120 exceeds a computation amount that may be handled by the computation capability of itself, the computation apparatus 120 may respectively transmit 7 client requests to the computation apparatuses 130-1∼130-3 with the number of hops less than 2 based on the resource allocation. The computation apparatus 130-3 respectively transmits 3 client requests to the computation apparatuses 130-1, 130-2 and 130-4 with the number of hops less than 2 based on the resource allocation. Now, cach of the computation apparatuses 120 and 130-1∼130-4 are allocated with 3 client requests, so as to achieve a resource balancing effect, and meet the demand of delay tolerance.

It should be noted that various parameters (for example, the number of the computation apparatuses, the network topology, the number of the client requests, etc.) in the aforementioned embodiments are only used for explaining examples. Moreover, the content of the client request is not limited to image recognition or positioning, which may be various applications such as network data analysis, sensing data analysis, data searching, etc., in other embodiments.

It should be noted that in various steps of the aforementioned embodiments, it is assumed that the integration apparatus 110 has a damage or malfunction, and cannot normally work. Each of the computation apparatuses 120 and 130-1∼130-4 record the network topology of the entire communication system 3 or capability and resource usage status of each of the apparatuses. Therefore, the computation apparatuses 120 and 130-1∼130-4 may determine one of the computation apparatuses 120 and 130-1∼130-4 to serve as the new integration apparatus 110. In an embodiment, the computation apparatuses 120 and 130-1∼130-4 may determine the one serving as the integration apparatus 10 based on identification information (for example, Internet Protocol (IP) address, MAC address or other identification codes) of the computation apparatuses 120 and 130-1∼130-4.

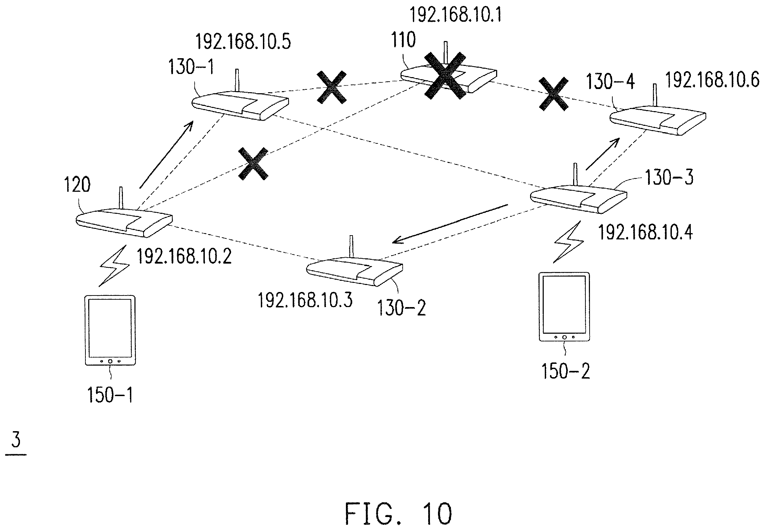

Taking the IP address as an example, FIG. 10 is a schematic diagram of replacement of the integration apparatus 110 according to an embodiment of the disclosure. Referring to FIG. 10, the IP addresses of the computation apparatuses 120 and 130-1∼130-4 are respectively 192.168.10.2, 192.168.10.5, 192.168.10.3, 192.168.10.4 and 192.168.10.6. When the original integration apparatus 110 (the IP address thereof is 192.168.10.1) has a problem, the connections between the computation apparatuses 120 and 130-1∼130-4 and the integration apparatus 110 are interrupted, and the computation demand cannot be obtained. In response to the integration apparatus 110 having a problem, since the IP address of the computation apparatus 120 is the closest to the IP address of the original integration apparatus 110, the computation apparatus 120 is taken as the new integration apparatus 110. Now, the computation apparatus 120 serves as the integration apparatus 110 to receive the request contents from the computation apparatuses 130-1∼130-4, and integrates the request contents of the computation apparatuses 130-1∼130-4 to generate the computation demand, and then broadcasts the computation demand to the computation apparatuses 130-1∼130-4. Deduced by analogy, if the computation apparatus 120 has a problem, the computation apparatus 130-2 then serves as the integration apparatus 110.

It should be noted that the rule of selecting the new integration apparatus 110 is probably based on factors such as the number of the currently connected request apparatuses 150, the computation capability, or transmission time of the other apparatuses, etc., which may be adjusted according to actual requirement. Moreover, in some embodiments, it is also possible to randomly select any one of the computation apparatuses 120 and 130-1∼130-4.

Besides, if the request apparatuses 150-1 and 150-2 have computation capability (i.e. become the computation apparatuses), the request apparatuses 150-1 and 150-2 may also share the data amount of themselves or the other apparatuses. Therefore, the computation apparatuses 120 and 130-1∼130-4 may obtain the resource allocation of the computation apparatuses 120 and 130-1∼130-4 and the request apparatuses 150-1 and 150-2 according to the computation demand (different computation model 122-15 is probably switched, or the current network topology and capability of each of the apparatuses are considered to establish the new computation model 122-15). The computation apparatuses 120 and 130-3 connected to the request apparatuses 150-1 and 150-2 may transfer a data computation result of the data to be computed corresponding to the computation amount handled by the request apparatuses 150-1 and 150-2. In this way, a whole computation capacity of the system is improved.

In summary, the computation apparatus, the resource allocation method thereof and the communication system of the embodiments of the disclosure provide a distributed computation resource allocation technique, and all of the computation apparatuses may calculate the resource allocation of themselves and the other computation apparatuses. Any computation apparatus may replace the integration apparatus used for integrating the request contents, so as to improve reliability. Moreover, in the embodiments of the disclosure, the embodiments of the disclosure may coordinate two algorithms for resource allocation, and in collaboration with operations of the off-line stage and the on-line stage, not only load balance is achieved, but also the demand on quick computation is met.

## Claims

1. A computation apparatus (120, 130, 130-1∼130-4), **characterized by** comprising:
a communication transceiver (121), transmitting or receiving data; and
a processor (123), coupled to the communication transceiver (121), and is configured to:
receive, through the communication transceiver (121), a computation demand, wherein the computation demand comprises request contents of the computation apparatus (120, 130, 130-1∼130-4) and at least one second computation apparatus (120, 130, 130-1∼130-4), and each of the request contents is related to data computation;
obtain a resource allocation of the computation apparatus (120, 130, 130-1∼130-4) and the at least one second computation apparatus (120, 130, 130-1∼130-4) according to the computation demand; and
process the data computation related to the request contents according to a resource allocation of the computation apparatus (120, 130, 130-1∼130-4) itself.

2. The computation apparatus (120, 130, 130-1∼130-4) as claimed in claim 1, **characterized in that** the received computation demand is generated by integrating the request content of the computation apparatus (120, 130, 130-1∼130-4) and the request content of the at least one second computation apparatus (120, 130, 130-1∼130-4).

3. The computation apparatus (120, 130, 130-1∼130-4) as claimed in claim 1, **characterized in that** the request contents are related to a data amount to be computed, and the processor (123) is configured to:
obtain a computation amount respectively handled by each of the computation apparatus (120, 130, 130-1∼130-4) and the at least one second computation apparatus (120, 130, 130-1∼130-4) for the data amount to be computed, and the resource allocation is related to a computation amount handled by the computation apparatus (120, 130, 130-1∼130-4) and the at least one second computation apparatus (120, 130, 130-1∼130-4).

4. The computation apparatus (120, 130, 130-1∼130-4) as claimed in claim 3, **characterized in that** the processor (123) is configured to:
receive, through the communication transceiver (121), at least one data to be computed, wherein the at least one data to be computed corresponds to one of the request contents, and a data amount of the at least one data to be computed is the data amount to be computed; and
transmit, through the communication transceiver (121), the at least one data to be computed according to the computation amount respectively handled by each of the computation apparatus (120, 130, 130-1∼130-4) and the at least one second computation apparatus (120, 130, 130-1∼130-4).

5. The computation apparatus (120, 130, 130-1∼130-4) as claimed in claim 1, **characterized in that** the request contents are related to a delay tolerance of obtaining a result of the data computation, and the processor (123) is configured to:
obtain paths for transmitting the result of the corresponding data computation by the computation apparatus (120, 130, 130-1∼130-4) and the at least one second computation apparatus (120, 130, 130-1∼130-4) according to the delay tolerance recorded in the computation demand, wherein each of the paths is related to a transmission delay between the computation apparatus (120, 130, 130-1∼130-4) and the at least one second computation apparatus (120, 130, 130-1∼130-4), and the resource allocation is related to each of the paths.

6. The computation apparatus (120, 130, 130-1∼130-4) as claimed in claim 1, **characterized in that** the processor (123) is configured to:
update, through the communication transceiver (121), the request content and a resource usage status of the at least one second computation apparatus (120, 130, 130-1∼130-4).

7. The computation apparatus (120, 130, 130-1∼130-4) as claimed in claim 1, **characterized in that** the processor (123) is configured to:
receive, through the communication transceiver (121), the request content of the at least one second computation apparatus (120, 130, 130-1∼130-4);
integrate the request content of the at least one second computation apparatus (120, 130, 130-1-130-4) to generate the computation demand; and
broadcast, through the communication transceiver (121), the computation demand to the at least one second computation apparatus (120, 130, 130-1-130-4).

8. The computation apparatus (120, 130, 130-1-130-4) as claimed in claim 1, **characterized in that** the processor (123) is configured to:
randomly generate the computation demand, capability of the computation apparatus (120, 130, 130-1-130-4) and the at least one second computation apparatus (120, 130, 130-1-130-4) and path information of network topology to serve as a plurality of input parameters;
input the input parameters to a first algorithm to obtain a plurality of output parameters, wherein the output parameters are related to the resource allocation; and
train a plurality of computation models (122-15) through a second algorithm based on the input parameters and the output parameters, wherein the first algorithm is different to the second algorithm.

9. The computation apparatus (120, 130, 130-1∼130-4) as claimed in claim 8, **characterized in that** the processor (123) is configured to:
select one of the computation models (122-15) according to the computation demand and the capability and a resource usage status of the computation apparatus (120, 130, 130-1∼130-4) and the at least one second computation apparatus (120, 130, 130-1∼130-4); and
input the computation demand to the selected computation model (122-15) to obtain the resource allocation.

10. The computation apparatus (120, 130, 130-1∼130-4) as claimed in claim 8, **characterized in that** the first algorithm is a Linear Programming (LP) algorithm, and the second algorithm is a Machine Learning (ML) algorithm.

11. The computation apparatus (120, 130, 130-1∼130-4) as claimed in claim 1, **characterized in that** the processor (123) is configured to:
obtain a resource allocation of the computation apparatus (120, 130, 130-1∼130-4), the at least one second computation apparatus (120, 130, 130-1∼130-4) and at least one third computation apparatus (120, 130, 130-1∼130-4) according to the computation demand, wherein the at least one third computation apparatus (120, 130, 130-1∼130-4) provides one of the request contents.

12. The computation apparatus (120, 130, 130-1∼130-4) as claimed in claim 1, **characterized in that** the computation apparatus (120, 130, 130-1∼130-4) belongs to a first layer fog node.

13. A resource allocation method, adapted to a computation apparatus (120, 130, 130-1∼130-4), the resource allocation method **characterized by** comprising:
receiving a computation demand, wherein the computation demand comprises request contents of the computation apparatus (120, 130, 130-1∼130-4) and at least one second computation apparatus (120, 130, 130-1∼130-4), and each of the request contents is related to data computation;
obtaining a resource allocation of the computation apparatus (120, 130, 130-1∼130-4) and the at least one second computation apparatus (120, 130, 130-1∼130-4) according to the computation demand; and
processing the data computation related to the request content according to a resource allocation of the computation apparatus (120, 130, 130-1∼130-4) itself.

14. The resource allocation method as claimed in claim 13, **characterized in that** the received computation demand is generated by integrating the request content of the computation apparatus (120, 130, 130-1∼130-4) and the request content of the at least one second computation apparatus (120, 130, 130-1∼130-4).

15. The resource allocation method as claimed in claim 13, **characterized in that** the request contents are related to a data amount to be computed, and the step of obtaining the resource allocation of the computation apparatus (120, 130, 130-1∼130-4) and the at least one second computation apparatus (120, 130, 130-1∼130-4) according to the computation demand comprises:
obtaining a computation amount respectively handled by each of the computation apparatus (120, 130, 130-1-130-4) and the at least one second computation apparatus (120, 130, 130-1∼130-4) for the data amount to be computed, wherein the resource allocation is related to a computation amount handled by the computation apparatus (120, 130, 130-1∼130-4) and the at least one second computation apparatus (120, 130, 130-1∼130-4).

16. The resource allocation method as claimed in claim 15, **characterized in that** before the step of receiving the computation demand, the resource allocation method further comprises:
receiving at least one data to be computed, wherein the at least one data to be computed to one of the request contents, and a data amount of the at least one data to be computed is the data amount to be computed; and after the step of obtaining the computation amount respectively handled by each of the computation apparatus (120, 130, 130-1∼130-4) and the at least one second computation apparatus (120, 130, 130-1∼130-4) for the computation demand, the resource allocation method further comprises:
transmitting the at least one data to be computed according to the computation amount respectively handled by each of the computation apparatus (120, 130, 130-1∼130-4) and the at least one second computation apparatus (120, 130, 130-1∼130-4).

17. The resource allocation method as claimed in claim 13, **characterized in that** the request contents are related to a delay tolerance of obtaining a result of the data computation, and the step of obtaining the resource allocation of the computation apparatus (120, 130, 130-1-130-4) and the at least one second computation apparatus (120, 130, 130-1∼130-4) according to the computation demand comprises:
obtaining paths for transmitting the result of the corresponding data computation by the computation apparatus (120, 130, 130-1-130-4) and the at least one second computation apparatus (120, 130, 130-1∼130-4) according to the delay tolerance recorded in the computation demand, wherein each of the paths is related to a transmission delay between the computation apparatus (120, 130, 130-1∼130-4) and the at least one second computation apparatus (120, 130, 130-1∼130-4), and the resource allocation is related to each of the paths.

18. The resource allocation method as claimed in claim 13, **characterized in that** the step of receiving the computation demand further comprises:
receiving and updating the request content and a resource usage status of the at least one second computation apparatus (120, 130, 130-1∼130-4).

19. The resource allocation method as claimed in claim 13, **characterized by** further comprising:
receiving the request content of the at least one second computation apparatus (120, 130, 130-1∼130-4);
integrating the request content of the at least one second computation apparatus (120, 130, 130-1∼130-4) to generate the computation demand; and
broadcasting the computation demand to the at least one second computation apparatus (120, 130, 130-1∼130-4).

20. The resource allocation method as claimed in claim 13, **characterized by** further comprising:
randomly generate the computation demand, capability of the computation apparatus (120, 130, 130-1∼130-4) and the at least one second computation apparatus (120, 130, 130-1∼130-4) and path information of network topology to serve as a plurality of input parameters;
inputting the input parameters to a first algorithm to obtain a plurality of output parameters, wherein the output parameters are related to the resource allocation; and
training a plurality of computation models (122-15) through a second algorithm based on the input parameters and the output parameters, wherein the first algorithm is different to the second algorithm.

21. The resource allocation method as claimed in claim 20, **characterized in that** step of obtaining the resource allocation of the computation apparatus (120, 130, 130-1∼130-4) and the at least one second computation apparatus (120, 130, 130-1∼130-4) according to the computation demand comprises:
selecting one of the computation models (122-15) according to the computation demand and the capability and a resource usage status of the computation apparatus (120, 130, 130-1∼130-4) and the at least one second computation apparatus (120, 130, 130-1∼130-4); and
inputting the computation demand to the selected computation model (122-15) to obtain the resource allocation.

22. The resource allocation method as claimed in claim 20, **characterized in that** the first algorithm is a Linear Programming (LP) algorithm, and the second algorithm is a Machine Learning (ML) algorithm.

23. The resource allocation method as claimed in claim 13, **characterized in that** the step of obtaining the resource allocation of the computation apparatus (120, 130, 130-1-130-4) and the at least one second computation apparatus (120, 130, 130-1∼130-4) according to the computation demand comprises:
obtaining a resource allocation of the computation apparatus (120, 130, 130-1∼130-4), the at least one second computation apparatus (120, 130, 130-1∼130-4) and at least one third computation apparatus (120, 130, 130-1∼130-4) according to the computation demand, wherein the at least one third computation apparatus (120, 130, 130-1∼130-4) provides one of the request contents.

24. The resource allocation method as claimed in claim 13, **characterized in that** the computation apparatus (120, 130, 130-1∼130-4) belongs to a first layer fog node.

25. A communication system (2, 3), **characterized by** comprising:
at least two computation apparatuses (120, 130, 130-1∼130-4), transmitting request contents, wherein each of the request contents is related to data computation; and
an integration apparatus (110), integrating the request contents of the at least two computation apparatuses (120, 130, 130-1∼130-4) into a computation demand, and broadcasting the computation demand, wherein
each of the computation apparatuses (120, 130, 130-1∼130-4) obtains a resource allocation of all of the at least two computation apparatuses (120, 130, 130-1∼130-4) according to the computation demand, and each of the computation apparatuses (120, 130, 130-1∼130-4) performs the data computation related to the request content according to a resource allocation of itself.

26. The communication system (2, 3) as claimed in claim 25, **characterized in that** the request contents are related to a data amount to be computed, and each of the computation apparatuses (120, 130, 130-1∼130-4) obtains a computation amount respectively handled by itself and the other computation apparatus (120, 130, 130-1∼130-4) for the data amount to be computed, and the resource allocation is related to a computation amount handled by the at least two computation apparatuses (120, 130, 130-1∼130-4).

27. The communication system (2, 3) as claimed in claim 26, **characterized in that** one of the computation apparatus (120, 130, 130-1∼130-4) receives at least one data to be computed, wherein the at least one data to be computed corresponds to one of the request content, and a data amount of the at least one data to be computed is the data amount to be computed; and
one of the computation apparatuses (120, 130, 130-1∼130-4) transmits the at least one data to be computed according to the computation amount respectively handled by the at least two computation apparatuses (120, 130, 130-1∼130-4).

28. The communication system (2, 3) as claimed in claim 25, **characterized in that** the request content is related to a delay tolerance of obtaining a result of the data computation, and ²each of the computation apparatuses (120, 130, 130-1∼130-4) obtains paths of all of the at least two computation apparatuses (120, 130, 130-1∼130-4) transmitting the result of the corresponding data computation according to the delay tolerance recorded in the computation demand, wherein each of the paths is related to a transmission delay between each of the computation apparatuses (120, 130, 130-1∼130-4) and the other one of the computation apparatuses (120, 130, 130-1∼130-4), and the resource allocation is related to each of the paths.

29. The communication system (2, 3) as claimed in claim 25, **characterized in that** each of the computation apparatuses (120, 130, 130-1∼130-4) receives and updates the request contents and resource usage statuses of all of the at least two computation apparatuses (120, 130, 130-1∼130-4).

30. The communication system (2, 3) as claimed in claim 25, **characterized in that** in response to that the integration apparatus (110) has a problem, one of the computation apparatuses (120, 130, 130-1∼130-4) decides one of the at least two computation apparatuses (120, 130, 130-1∼130-4) to serve as the integration apparatus (110).

31. The communication system (2, 3) as claimed in claim 30, **characterized in that** one of the computation apparatuses (120, 130, 130-1∼130-4) decides to serve as the integration apparatus (110) based on identification information of the at least two computation apparatuses (120, 130, 130-1∼130-4).

32. The communication system (2, 3) as claimed in claim 25, **characterized in that** each of the computation apparatuses (120, 130, 130-1∼130-4) is configured to:
randomly generate the computation demand, capability of the at least two computation apparatuses (120, 130, 130-1∼130-4) and path information of network topology formed by the communication system (2, 3) to serve as a plurality of input parameters;
input the input parameters to a first algorithm to obtain a plurality of output parameters, wherein the output parameters are related to the resource allocation; and
train a plurality of computation models (122-15) through a second algorithm based on the input parameters and the output parameters, wherein the first algorithm is different to the second algorithm.

33. The communication system (2, 3) as claimed in claim 32, **characterized in that** each of the computation apparatuses (120, 130, 130-1∼130-4) is configured to:
select one of the computation models (122-15) according to the computation demand and the capability and resource usage statuses of the at least two computation apparatuses (120, 130, 130-1∼130-4); and
input the computation demand to the selected computation model (122-15) to obtain the resource allocation.

34. The communication system (2, 3) as claimed in claim 32, **characterized in that** the first algorithm is a Linear Programming (LP) algorithm, and the second algorithm is a Machine Learning (ML) algorithm.

35. The communication system (2, 3) as claimed in claim 25, **characterized by** further comprising:
at least one second computation apparatus (120, 130, 130-1∼130-4), respectively providing the request content to the at least two computation apparatuses (120, 130, 130-1∼130-4); and
each of the computation apparatuses (120, 130, 130-1∼130-4) is configured to:
obtain a resource allocation of the at least two computation apparatuses (120, 130, 130-1∼130-4), and the at least one second computation apparatus (120, 130, 130-1∼130-4) according to the computation demand.

36. The communication system (2, 3) as claimed in claim 25, **characterized in that** each of the computation apparatuses (120, 130, 130-1∼130-4) belongs to a first layer fog node.
